# EUROPEAN PATENT SPECIFICATION

(11) **EP 4 749 573 B1**
(45) Date of publication and mention of the grant of the patent: **28.10.2026**
(21) Application number: 24214535.7
(22) Date of filing: 21.11.2024
(51) Int. Cl.: G06T 7/521, G06T 5/00

(54) **METHOD AND COMPUTER PROGRAM FOR REMOVING ERRONEOUS POINTS FROM A SET OF POINTS OF A 3D VIRTUAL OBJECT PROVIDED BY 3D IMAGING**
VERFAHREN UND COMPUTERPROGRAMM ZUM ENTFERNEN VON FEHLERHAFTEN PUNKTEN AUS EINEM SATZ VON PUNKTEN EINES 3D-VIRTUELLEN OBJEKTS, DAS DURCH 3D-BILDGEBUNG BEREITGESTELLT WIRD
PROCÉDÉ ET PROGRAMME D'ORDINATEUR POUR ÉLIMINER DES POINTS ERRONÉS D'UN ENSEMBLE DE POINTS D'UN OBJET VIRTUEL 3D FOURNI PAR IMAGERIE 3D

(43) Date of publication of application: 27.05.2026
(73) Proprietor: Sick IVP AB, 583 30 Linköping (SE)
(72) Inventor: EDHAMMER, Jens, 587 34 Linköping (SE); MURHED, Anders, 582 46 Linköping (SE)
(74) Representative: Bergenstråhle & Partners AB

(56) References cited:
- US-A1- 2023 274 452
- XIAOKUN LI ET AL: "Sensor error modeling and compensation for range images captured by a 3D ranging system", MEASUREMENT SCIENCE AND TECHNOLOGY, IOP, BRISTOL, GB, vol. 19, no. 12, 1 December 2008 (2008-12-01), pages 125502, XP020144315, ISSN: 0957-0233, DOI: 10.1088/0957-0233/19/12/125502
- LI HUAYANG ET AL: "Specular Surface Measurement with Laser Plane Constraint to Reduce Erroneous Points", 6 August 2019, ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 53 - 63, ISBN: 978-3-319-10403-4, XP047516134

## Description

### Technical field

The present invention relates to a method for removing erroneous points from a set of points of a three dimensional, 3D, virtual object provided by 3D imaging of a corresponding real world object by means of a camera with an image sensor.

### Background art

Traditional light triangulation systems have been employed for 3D object reconstruction by projecting, e.g. a laser stripe onto an object and capturing the reflected light using a sensor. The 3D surface profile of the object is then reconstructed by analyzing the displacement of the laser stripe on the sensor. This method has been in use for several decades, particularly in applications requiring high-precision measurements such as industrial quality control and surface inspection.

However, a significant challenge with light triangulation arises when the object being scanned has glossy surfaces, such as certain materials, e.g. various metals or the like, where specular reflections occur. These reflections can cause data errors, leading to inaccurate or incomplete 3D reconstructions. Glossy materials, present a common issue in many industrial environments, where the reflections from these surfaces can distort the light line (e.g., the laser line), resulting in unreliable height maps and point clouds.

The problem of reflections in light triangulation has led to the development of several methods aimed at mitigating the impact of specular reflections. For instance, polarization filters have been proposed to reduce the effects of reflections by blocking light that is reflected in a specular manner. However, this method does not fully eliminate reflections, especially in cases of complex or highly reflective surfaces. Similarly, techniques based on geometric consistency attempt to optimize the angle between the light source and sensor to minimize reflection errors, but these methods require precise calibration and may not perform well in all scanning environments.

Additionally, methods such as alternating light sources (e.g., alternating lasers) and light shields (e.g. laser shields) have been explored to suppress reflections. Alternating light sources involve using multiple light sources with different properties to differentiate between true surface data and reflected light, but this approach can increase scanning time and complexity. Shields, on the other hand, block unwanted reflections from reaching the sensor, yet they introduce limitations in terms of the range and flexibility of the scanning system.

While these existing methods help to some extent, no single approach has proven to be universally effective across a variety types of objects and scanning conditions. As a result, multiple techniques are often combined in practice, each addressing specific challenges of glossy surfaces in light triangulation.

US 2023/274452 A1 discloses a method and arrangements for removing erroneous points from a set of points of a three dimensional, 3D, virtual object provided by 3D imaging of a corresponding real world object by means of a camera with image sensor. The set of points is obtained and, for respective point, conflicting points are identified. A conflicting point is a point of the set that cannot validly coexist with the respective point according to predefined criteria. Points that have been involved in conflicts a greater number of times than other points are removed from the set.

Xiaokun Li et al., "Sensor error modeling and compensation for range images captured by a 3D ranging system", Measurement Science and Technology, vol. 19, no. 12, 1 December 2008, page 125502, discloses sensor error modeling and compensation for structured lighting-based 3D optical camera measurement systems. Two model-based methods, the area model and line model, are proposed to model the systematic errors at different distances and orientation angles. An error lookup table is built with these models and used to reduce the systematic error of acquired data.

Li Huayang et al., "Specular Surface Measurement with Laser Plane Constraint to Reduce Erroneous Points", 6 August 2019, Lecture Notes in Computer Science, Springer International Publishing, pages 53-63, discloses a method for reducing erroneous points generated by specular reflections using multiple line structured-light stripes extraction algorithm and laser plane constraint method for line structured-light scanners. False measurements generated by specular reflections are eliminated with the laser plane constraint method.

The present invention seeks to overcome these limitations by providing a method for reducing the impact of reflections in light triangulation systems, ensuring more accurate and reliable 3D reconstructions, regardless of the surface properties of the scanned object.

### Summary of invention

It is therefore an object of the present disclosure to provide a method and a computer program to mitigate, alleviate or eliminate one or more of the above-identified deficiencies and disadvantages.

This object is achieved by means of the subject matter of the independent claims of the present disclosure, wherein further aspects of the present disclosure are incorporated in the dependent claims.

The invention is defined by the independent claims to which reference is now made. Advantageous features are set out in the dependent claims.

According to a first aspect of the present disclosure it is provided a method for removing erroneous points from a set of points of a 3D virtual object provided by light triangulation 3D imaging of a corresponding real world object by means of a camera with an image sensor and a light source, wherein the real world object is transported in a transport direction defining a transport axis, said method comprising: obtaining a virtual image comprising said set of points, each point having 3D coordinates, identifying within said set of points, a plurality of erroneous points, said erroneous points are configured in a predetermined pattern in the virtual image, removing said erroneous points within said predetermined pattern in the virtual image.

By identifying a plurality of erroneous points which are configured in a predetermined pattern, it possible to provide a method for removing erroneous points from a set of points of a 3D virtual object provided by light triangulation which the reduces the impact of reflections in light triangulation systems, ensuring more accurate and reliable 3D reconstructions, regardless of the surface properties of the scanned object, wherein the method does not require additional hardware.

The method comprises performing a first transformation of said virtual image by rotating said virtual image at least partially around an axis substantially perpendicular to the transport axis such that the virtual image is viewed from a side-perspective, wherein the first transformation is performed prior to identifying said erroneous points.

The advantage of these embodiments is that the predetermined pattern of erroneous points is more easily identified.

In various example embodiments rotating said virtual image may comprise rotating by a vector operation.

The advantage of these embodiments is that an efficient transformation of the 3D virtual image which is precise and stable is achieved.

In various example embodiments rotating said virtual image may comprise rotating by a pre-determined angle.

The advantage of these embodiments is that a simple and fixed transformation of the 3D virtual is achieved.

In various example embodiments the method may further comprise performing a second transformation of said virtual image by performing a linearization based on the identified erroneous points.

The advantage of these embodiments is that removal of the erroneous points may be achieved with reduced computational complexity.

In various example embodiments the method may further comprise performing a third transformation of said virtual image by performing an orthogonalization based on the identified erroneous points after performing the second transformation.

The advantage of these embodiments is that removal of the erroneous points may be achieved with further reduced computational complexity.

In various example embodiments the method may further comprise performing a fourth transformation of said virtual image by performing a dimensionality reduction based on the identified erroneous points after performing the third transformation.

The advantage of these embodiments is that removal of the erroneous points may be achieved with yet further reduced computational complexity.

In various example embodiments prior to the first transformation, the identified erroneous points may be aligned with the transport axis.

The advantage of these embodiments is that subsequent transformations of the virtual image may be conducted in a simpler manner.

In various example embodiments said predetermined pattern may be essentially a line.

The advantage of these embodiments is that an easily identifiable pattern of erroneous points is provided.

In various example embodiments said line may be at least partially linear and/or curved.

The advantage of these embodiments is that an easily identifiable pattern of erroneous points is provided.

In various example embodiments said predetermined pattern may comprise at least one pre-determined geometrical shape.

The advantage of these embodiments is that a distinct pattern of erroneous points is provided.

In various example embodiments said pre-determined geometrical shape may be a triangle and/or a wedge.

The advantage of these embodiments that a distinct pattern of erroneous points is provided.

In various example embodiments the method may further comprise the step of reproducing a corrected virtual image by performing an inverse image transformation excluding the removed erroneous points.

The advantage of these embodiments is that a more accurate 3D model can be provided, which may be advantageous utilized in e.g., industrial quality control and surface inspection purposes.

According to a second aspect of the present disclosure it is provided a computer program comprising computer program code, the computer program being adapted, if executed by a processor to perform the method according to any embodiment described herein.

Further advantages with and features of the invention will be apparent from the following detailed description of preferred embodiments.

### Brief description of drawings

The invention is now described, by way of example, with reference to the accompanying drawings, in which:
Fig. 1 depicts a 3D virtual object provided by light triangulation 3D imaging of a corresponding real world object according to various example embodiments of the present disclosure.
Fig. 2a depicts examples of sources of erroneous points provided during light triangulation 3D imaging according to various example embodiments of the present disclosure.
Fig. 2b depicts top view of a virtual image provided by light triangulation 3D imaging wherein erroneous points configured in a predetermined pattern according to various example embodiments of the present disclosure.
Fig. 3a depicts a virtual image wherein a first transformation has been performed according to various example embodiments of the present disclosure.
Fig. 3b depicts a virtual image wherein a second transformation has been performed according to various example embodiments of the present disclosure.
Fig. 3c depicts a virtual image wherein a third transformation has been performed according to various example embodiments of the present disclosure.
Fig. 4 depicts a virtual image wherein a fourth transformation has been performed according to various example embodiments of the present disclosure.
Fig. 5 depicts a reproduced corrected virtual image according to various example embodiments of the present disclosure.
Fig. 6 depicts a schematic block diagram of various methods according to various example embodiments of the present disclosure.
Fig. 7 depicts a schematic block diagram of various methods according to various example embodiments of the present disclosure.

### Description of embodiments

The invention is not limited only to the embodiments described above and shown in the drawings, which primarily have an illustrative and exemplifying purpose. This patent application is intended to cover all adjustments and variants of the preferred embodiments described herein; thus, the present invention is defined by the wording of the appended claims . Thus, the method and computer program may be modified in all kinds of ways within the scope of the appended claims.

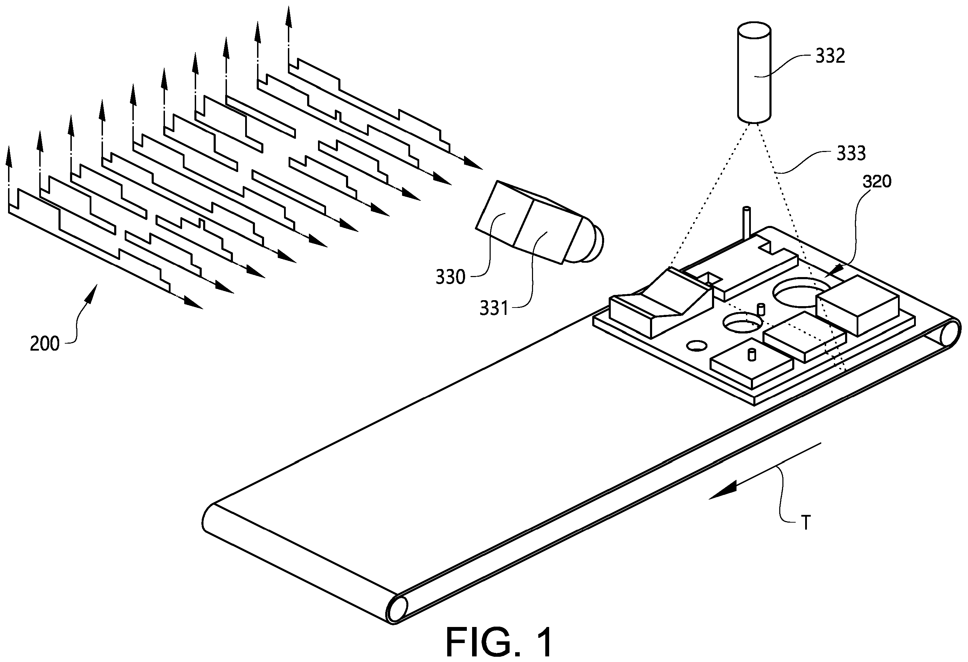

In figure 1, a 3D virtual object 200 provided by light triangulation 3D imaging of a corresponding real-world object 320 according to various example embodiments of the present disclosure is depicted. As depicted, the imaging of the real-world object 320 may be provided by means of a camera 330 with an image sensor 331 and a light source 332. The real-world object 320 may be transported in a transport direction defining a transport axis T.

The real-world object 320 may be any object suitable for 3D reconstruction, such as a car body, a sculpture, or a metal part. Glossy parts, e.g., polished metals or glass surfaces not belonging to such real-world objects 320 to be reconstructed could cause challenges in accurate light reflection and data capture.

The camera 330 may be a standard digital camera, a high-speed camera, or a specialized industrial camera. These cameras may be configured to capture images at various resolutions and frame rates to suit the specific requirements of the imaging process.

The image sensor 331 may be a CMOS sensor, a CCD sensor, or a hybrid sensor combining features of both. These types of sensors may be chosen based on their sensitivity to light and ability to capture high-quality images in different lighting conditions.

The light source 332 may be a laser diode, a light emitting diode (LED), a solid-state laser, or a fiber laser. The light source 332 may be selected based on their wavelength and intensity, which can significantly affect the quality of the projection of the light and the resulting image data. Typically, a laser may be used, resulting in a laser line on and reflected by the real-world object 320 towards the camera 330. Laser triangulation is often preferred, albeit not necessary, and the light triangulation may then sometimes be referred to as laser triangulation but also other light sources are able to provide a "sheet of light", in other words, a light plane, or other structured light can be used.

The transport direction axis T may be defined as the axis along which the object is moved for scanning, which may also be referred to as the transport vector or conveyance axis.

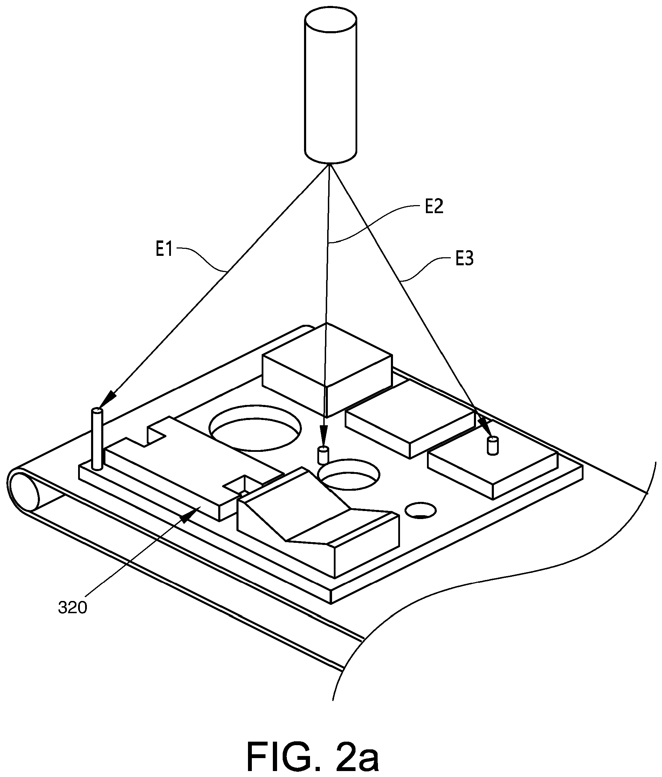

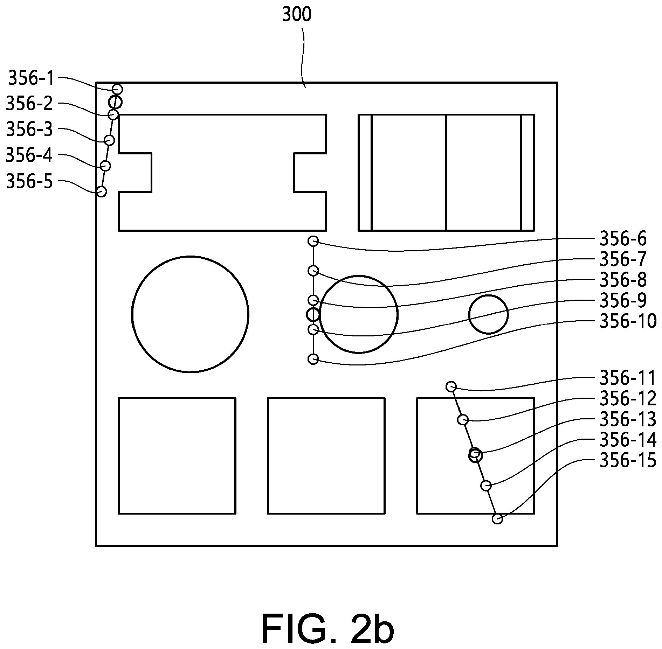

Turning now to figure 2a, an example of sources E1, E2, E3 of erroneous points 356-1...356-15 on a real-world object 320 which may occur during light triangulation 3D according to various example embodiments of the present disclosure is depicted. In figure 2a example sources of errors E1, E2, E3 are represented as bolt heads made of a suitable metal that may be glossy. It is appreciated other shapes are possible. The bolt heads are depicted at various heights on a substantially matte surface, exhibiting various geometrical shapes. Turning instead to figure 2b, a virtual image 300 in a top view perspective of the surface in figure 2a is depicted. As seen in figure 2b, the virtual image 300 may comprising erroneous points 356-1...356-15 configured in a predetermined pattern according to various example embodiments of the present disclosure. In figure 2b, there are three depicted predetermined patterns represented by five erroneous points 356-1, 356-2, 356-3, 356-4, 356-5, in a first pattern, 356-6, 356-7, 356-8, 356-9, 356-10, in a second pattern, 356-11, 356-12, 356-13, 356-14, 356-15 in a third pattern. It is appreciated that in reality the number of erroneous points may differ substantially from this, thus what is depicted in figure 2b should only be seen as a simplified example. Further, figure 2b depicts a top-perspective view of the virtual image 300 in this example, where it is clear the impact of the glossy surfaces may cause a predetermined pattern to be identified.

In various example embodiments, a predetermined pattern may refer to a specific arrangement or configuration of the erroneous points 356-1...356. The predetermined pattern may include geometric shapes, lines, or textures which may consistently emerge from sources of errors and is thus identifiable according to the methods described herein. In various example said predetermined pattern P may be essentially a line. In various example embodiments said line may be at least partially linear. In various example embodiments said line may be fully linear. In various example embodiments said line may be at least partially curved. In various example embodiments said line may be fully curved. **In** various example embodiments said line may be at least partially linear and at least partially curved. In various example embodiments said predetermined pattern P may comprise at least one pre-determined geometrical shape. In various example embodiments said pre-determined geometrical shape may be a triangle and/or a wedge. Another term for the pre-determined pattern may be ramp-shaped or ramp.

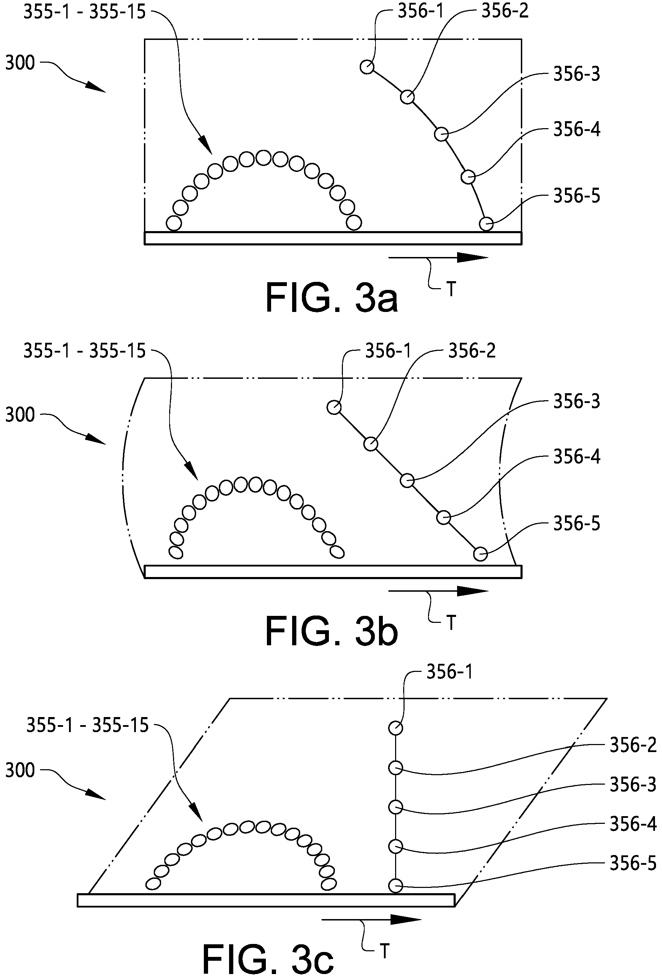

Turning now to figure 3a, a virtual image 300 wherein a first transformation has been performed according to various example embodiments of the present disclosure is depicted. The virtual image 300 is here represented as a point cloud wherein said set of points 355-1...355-15 representing a real world object 320 is depicted. Each point 355-1...355-15 comprises 3D coordinates. Similarly, erroneous points 356-1...356-15 configured in a predetermined pattern as described herein are depicted. In figure 3a, the erroneous points 356-1...356 are depicted as configured in a curved line.

In various example embodiments, the first transformation of said virtual image 300 may comprise rotating said virtual image 300 at least partially around an axis substantially perpendicular to the transport axis T. In other words, the virtual image 300 may be rotated such that it is viewed from a side-perspective. In various example embodiments, the first transformation T2 of said virtual image 300 may comprise rotating said virtual image 300 around an axis substantially perpendicular to the transport axis T by 90 degrees such that a top view of the virtual image 300 is transformed in a side view of the virtual image. Figure 3a may depict an example of such embodiments, as the virtual image 300 is represented as a side view aligned horizontally with the transport axis T. In various example embodiments first transformation is performed prior to identifying said erroneous points 356-1 ... 356-lt is advantageous to perform the first transformation in order to more easily identify that the erroneous points 356-1...356-15 are configured in the predetermined pattern. In other words, by performing the first transformation in the described manner, a higher likelihood of detecting the erroneous points 356-1...356-15 configured in the predetermined pattern is achieved.

In various example embodiments rotating said virtual image may comprise rotating by a vector operation. Rotating by a vector operation may involve transforming the virtual image using mathematical operations that manipulate its orientation in a 3D space. It is appreciated such operations are possible because all points in the virtual image 300 comprise 3D coordinates. Rotating by a vector operation may be achieved by applying a rotation matrix or quaternion, which may represent the desired rotation around the transport axis T, or the like.

In various example embodiments rotating said virtual image 300 may comprise rotating by a pre-determined angle. Rotating by a pre-determined angle may involve adjusting the orientation of the virtual image by a specific measure, typically defined in degrees or radians, e.g. 90 degrees from a top view to achieve a desired alignment with the transport axis T. This may be accomplished by applying a rotation matrix or quaternion corresponding to the specified angle. The rotation matrix may be generated based on the axis of rotation and the angle to ensure a precise first transformation of the virtual image 300.

Turning now to figure 3b, a virtual image 300 wherein a second transformation may have performed to various example embodiments of the present disclosure is depicted. In various example embodiments the method may further comprise performing S4 a second transformation of said virtual image 300 by performing a linearization based on the identified erroneous points 356-1...356-15. Linearization may refer a curve or complex data set being transformed to a straight line or sequence of linear segments. In other words, it may involve transforming non-linear relationships into linear ones. In the context of figures 3a and 3b, it is evident that the erroneous points 356-1...356-15 in the 3D virtual image 300 configured in the predetermined pattern have been transposed from a curve to a straight line. It is appreciated the points 355-1...355-15 representing the real world object 320 as well as the vertical axes of said 3D virtual image 300 are transposed as well, as is conventional. To perform a linearization, a linearization algorithm such piecewise linear interpolation, least-squares, RANSAC (Random Sample Consensus), or the like, may be employed.

Turning further to figure 3c, a virtual image 300 wherein a third transformation have been performed according to various example embodiments of the present disclosure is depicted. In various example embodiments the method may further comprise performing S5 a third transformation of said virtual image 300 by performing an orthogonalization based on the identified erroneous points 356-1...356-15 after performing S4 the second transformation. Orthogonalization may refer generally to a process of transforming a set of data points or a vector to a new set where each vector is perpendicular to the others. In other words, in figure 3c the orthogonalization is performed on the already linearized 3D virtual image 300 based on the erroneous points 356-1...356-15 configured in a pre-determined pattern. In other words, the erroneous points 356-1...356-15 may be transposed in a perpendicular relationship to the horizontal, transportation axis T. To perform orthogonalization, an orthogonalization algorithm such as the Gram-Schmidt process, Modified Gram-Schmidt, Principal Component Analysis (PCA), or the like, may be employed.

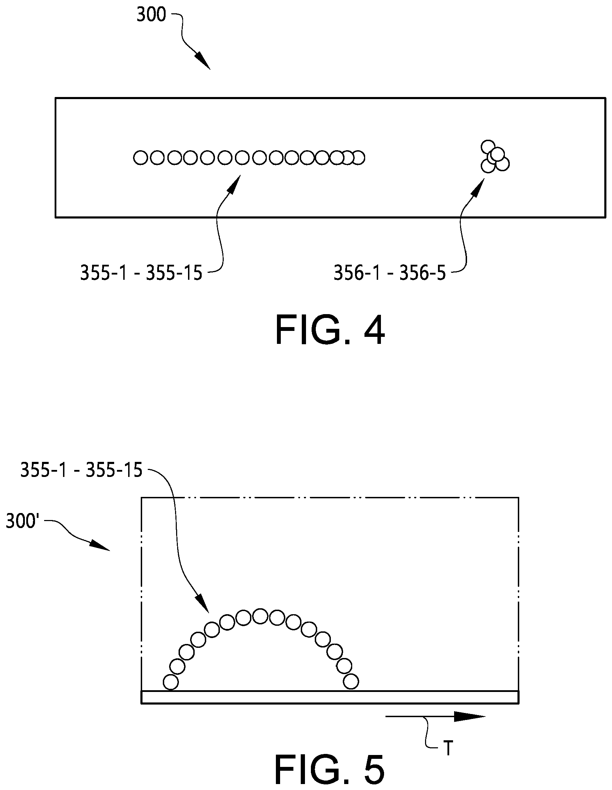

Turning now to figure 4, a virtual image 300 wherein a fourth transformation may have been performed according to various example embodiments of the present disclosure is depicted. In various example embodiments the method may further comprise further S6 a fourth transformation of said virtual image 300 by performing a dimensionality reduction based on the identified erroneous points 356-1...356-15 after performing S5 the third transformation. A dimensionality reduction may refer to a transformation which simplifies the representation of the erroneous points 356-1...356-15 identified in a pre-determined pattern, e.g., by reducing the number of variables or dimensions while retaining information, i.e. the 3D coordinates of each point. In other words, it involves condensing multi-dimensional data into a more manageable format, such as by creating a heat map. To perform dimensionality reduction, a dimensionality reduction algorithm such as t-Distributed Stochastic Neighbor Embedding (t-SNE), Principal Component Analysis (PCA), Autoencoders, or the like, may be employed.

Turning now to figure 5, a reproduced corrected virtual image according to various example embodiments of the present disclosure is depicted. In various example embodiments the method may further comprise the step of reproducing S8 a corrected virtual image 300' by performing an inverse image transformation excluding the removed erroneous points 356-1...356-15. The corrected virtual image 300' may therefore comprise said set of points 355-1...355-15 representing a real world object 320. In inverse image transformation may defined as a process involving reversing the transformations applied during the steps of performing transformations described herein. In various example embodiments, the dimensionality reduction algorithm may be applied to expand the previously reduced data back into its original dimensional space. In various example embodiments, any orthogonalization processes may be reversed, allowing for the reversal of the original relationships between the data points. In various example embodiments, linearization transformations may be reversed, enabling the reversal of the curve that was initially approximated. In various example embodiments, a verification step of comparing the corrected virtual image 300' by comparing it with the 3D virtual image 300 to ensure that any erroneous points have been removed addressed.

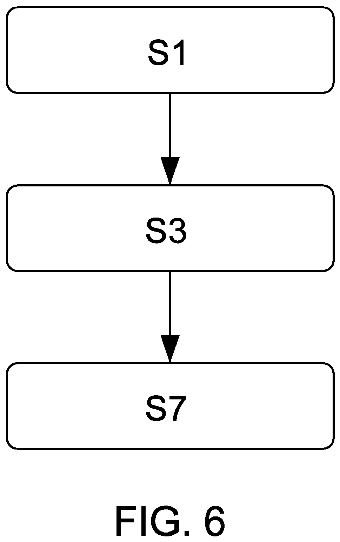

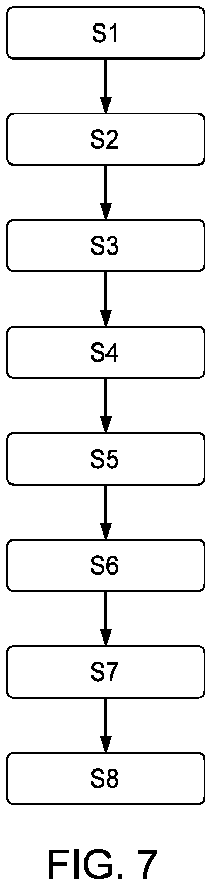

Turning now to figures 6 and 7, a schematic block diagrams of various methods according to various example embodiments of the present disclosure is depicted. Features described in the context of the above figures are applicable to said methods but will not be repeated here. Figure 7 depicts addition to the described steps S1, S3, S7 further steps pertaining to various performing various transformation S2, S4, S5, S6 as described herein.

It is appreciated that for the step of identifying S3 within said set of points 355-1... 355-15, a plurality of erroneous points 356-1...356-15, wherein said erroneous points 356-1...356-15 are configured in a predetermined pattern P in the virtual image 300 various approaches are possible. For example, algorithms such as include RANSAC (Random Sample Consensus), suitable for geometric shapes, PCA (Principal Component Analysis), suitable for analyzing variance and directions, Clustering algorithms, e.g., K-means or DBSCAN, suitable to group points based on spatial distribution, or shape detection techniques like the Hough Transform suitable to reveal structured arrangements. Additionally, or alternatively feature extraction methods may be suitable to identify geometric characteristics, and deep learning approaches, may be suitable to and identify complex patterns based on learned representations.

It is further appreciated that for the step of removing S7 said erroneous points 356-1...356-15 within said predetermined pattern P in the virtual image 300, various approaches are possible. In other words, once the erroneous points 356-1...356-15 in the virtual image 300 have been identified, said erroneous points 356-1...356-15 may be removed. In various example embodiments, a filtering algorithm may be used. In various example embodiments, a mask may be created to mark the erroneous points 356-1...356-15, may be used. In various example embodiments, interpolation methods may be used. In various example embodiments, wherein a second transformation of said virtual image 300 comprising a linearization based on the identified erroneous points 356-1...356-15 has been performed, a least-squares fitting method may be used to remove said erroneous points 356-1...356-15. In various example embodiments, wherein a third transformation of said virtual image 300 comprising an orthogonalization based on the identified erroneous points 356-1...356-15 has been performed, a Gram-Schmidt process may be used to remove said erroneous points 356-1...356-15. In various example embodiments, wherein a fourth transformation of said virtual image 300 comprising a dimensionality based on the identified erroneous points 356-1...356-15 has been performed, a t-Distributed Stochastic Neighbor Embedding (t-SNE) may used to remove said erroneous points 356-1...356-15.

It is further appreciated that the methods of figure 7 may further comprise performing S4 a second transformation of said virtual image 300 by performing a linearization based on the identified erroneous points 356-1...356-15. The methods of figure 7 may further comprise performing S5 a third transformation of said virtual image 300 by performing an orthogonalization based on the identified erroneous points 356-1...356-15 after performing S4 the second transformation. The methods of figure 7 may further comprise performing S6 a fourth transformation of said virtual image 300 by performing a dimensionality reduction based on the identified erroneous points 356-1...356-15 after performing S5 the third transformation. The various transformations have been described in relation to figures 3a-c and figure 4, but it should be appreciated each transformation advantageously facilitates more computationally efficient removal of said erroneous points 356-1...356-15.

In various example embodiments, the present disclosure may pertain to a computer program comprising computer program code, the computer program being adapted, if executed by a processor to perform methods according to various example embodiments described herein. The computer program preferably utilizes any or all of the above described methods. In various example embodiments, the computer program can be separated into substantially separate units, one unit for data acquisition and control of the measurement apparatus and another unit which may be run on a separate computer for data analysis and data presentation.

## Claims

1. A computer-implemented method for removing erroneous points from a set of points (355-1...355-15) of a 3D virtual object provided by light triangulation 3D imaging of a corresponding real world object (320) by means of a camera (330) with an image sensor (331) and a light source (332), wherein the real world object (320) is transported in a transport direction defining a transport axis (T), said method comprising:
• obtaining (S1) a virtual image (300) comprising said set of points (355-1...355-15), each point (355-1...355-15) having 3D coordinates,
• performing (S2) a first transformation of said virtual image (300) by rotating said virtual image (300) at least partially around an axis substantially perpendicular to the transport axis (T) such that the virtual image (300) is viewed from a side-perspective,
• after performing the first transformation (S2), identifying (S3) within said set of points (355-1... 355-15), a plurality of erroneous points (356-1...356-15), said erroneous points (356-1...356-15) are configured in a predetermined pattern (P) in the virtual image (300),
• removing (S7) said erroneous points (356-1...356-15) within said predetermined pattern (P) in the virtual image (300).

2. The method according to claim 1, wherein rotating said virtual image comprises rotating by a vector operation.

3. The method according to claim 1, wherein rotating said virtual image (300) comprises rotating by a pre-determined angle.

4. The method according to any one of claims 1-3, further comprising performing (S4) a second transformation of said virtual image (300) by performing a linearization based on the identified erroneous points (356-1...356-15).

5. The method according to claim 4, further comprising performing (S5) a third transformation of said virtual image (300) by performing an orthogonalization based on the identified erroneous points (356-1...356-15) after performing (S4) the second transformation.

6. The method according to claim 5, further comprising performing (S6) a fourth transformation of said virtual image (300) by performing a dimensionality reduction based on the identified erroneous points (356-1...356-15) after performing (S5) the third transformation.

7. The method according to any one of claims 1-6, wherein prior to the first transformation, the identified erroneous points (356-1...356-15) are aligned with the transport axis (T).

8. The method according to any one of the preceding claims, wherein said predetermined pattern (P) is essentially a line.

9. The method according to claim 8, wherein said line is at least partially linear and/or curved.

10. The method according to any one of the preceding claims, wherein said predetermined pattern (P) comprises at least one pre-determined geometrical shape.

11. The method according to claim 10, wherein said pre-determined geometrical shape is a triangle and/or a wedge.

12. The method according to any one of the preceding claims, further comprising the step of reproducing (S8) a corrected virtual image (300') by performing an inverse image transformation excluding the removed erroneous points (356-1...356-15).

13. A computer program comprising computer program code, the computer program being adapted, if executed by a processor to perform the method according to any one of claims 1-12.

## Patentansprüche

1. Computerimplementiertes Verfahren zum Entfernen fehlerhafter Punkte aus einem Satz von Punkten (355-1...355-15) eines 3D-virtuellen Objekts, das durch 3D-Bildgebung mittels Lichttriangulation eines entsprechenden realen Objekts (320) mittels einer Kamera (330) mit einem Bildsensor (331) und einer Lichtquelle (332) bereitgestellt wird, wobei das reale Objekt (320) in einer Transportrichtung transportiert wird, die eine Transportachse (T) definiert, wobei das Verfahren Folgendes umfasst:
• Erhalten (S1) eines virtuellen Bildes (300), das den Satz von Punkten (355-1...355-15) umfasst, wobei jeder Punkt (355-1...355-15) 3D-Koordinaten hat,
• Durchführen (S2) einer ersten Transformation des virtuellen Bildes (300) durch Rotieren des virtuellen Bildes (300) zumindest teilweise um eine Achse, die im Wesentlichen senkrecht zu der Transportachse (T) ist, sodass das virtuelle Bild (300) aus einer Seitenperspektive betrachtet wird,
• nach dem Durchführen der ersten Transformation (S2), Identifizieren (S3) innerhalb des Satzes von Punkten (355-1...355-15) einer Vielzahl fehlerhafter Punkte (356-1...356-15), wobei diese fehlerhaften Punkte (356-1...356-15) in dem virtuellen Bild (300) in einem vorgegebenen Muster (P) angeordnet sind,
• Entfernen (S7) der fehlerhaften Punkte (356-1...356-15) innerhalb des vorgegebenen Musters (P) in dem virtuellen Bild (300).

2. Verfahren nach Anspruch 1, wobei das Rotieren des virtuellen Bildes ein Rotieren durch eine Vektoroperation umfasst.

3. Verfahren nach Anspruch 1, wobei das Rotieren des virtuellen Bildes (300) ein Rotieren um einen vorgegebenen Winkel umfasst.

4. Verfahren nach einem der Ansprüche 1-3, weiter umfassend Durchführen (S4) einer zweiten Transformation des virtuellen Bildes (300) durch Durchführen einer Linearisierung, basierend auf den identifizierten fehlerhaften Punkten (356-1 356-15).

5. Verfahren nach Anspruch 4, weiter umfassend Durchführen (S5) einer dritten Transformation des virtuellen Bildes (300) durch Durchführen einer Orthogonalisierung basierend auf den identifizierten fehlerhaften Punkten (356-1...356-15) nach dem Durchführen (S4) der zweiten Transformation.

6. Verfahren nach Anspruch 5, weiter umfassend Durchführen (S6) einer vierten Transformation des virtuellen Bildes (300) durch Durchführen einer Dimensionsreduktion basierend auf den identifizierten fehlerhaften Punkten (356-1...356-15) nach dem Durchführen (S5) der dritten Transformation.

7. Verfahren nach einem der Ansprüche 1-6, wobei vor der ersten Transformation die identifizierten fehlerhaften Punkte (356-1...356-15) an der Transportachse (T) ausgerichtet sind.

8. Verfahren nach einem der vorstehenden Ansprüche, wobei das vorgegebene Muster (P) im Wesentlichen eine Linie ist.

9. Verfahren nach Anspruch 8, wobei die Linie zumindest teilweise geradlinig und/oder gekrümmt ist.

10. Verfahren nach einem der vorstehenden Ansprüche, wobei das vorgegebene Muster (P) mindestens eine vorgegebene geometrische Form umfasst.

11. Verfahren nach Anspruch 10, wobei die vorgegebene geometrische Form ein Dreieck und/oder ein Keil ist.

12. Verfahren nach einem der vorstehenden Ansprüche, weiter umfassend den Schritt des Reproduzierens (S8) eines korrigierten virtuellen Bildes (300') durch Durchführen einer inversen Bildtransformation unter Ausschluss der entfernten fehlerhaften Punkte (356-1...356-15).

13. Computerprogramm, umfassend Computerprogrammcode, wobei das Computerprogramm ausgebildet ist, falls es durch einen Prozessor ausgeführt wird, das Verfahren nach einem der Ansprüche 1-12 durchzuführen.

## Revendications

1. Procédé mis en œuvre par ordinateur pour éliminer des points erronés d'un ensemble de points (355-1...355-15) d'un objet virtuel 3D fourni par imagerie 3D par triangulation de lumière d'un objet du monde réel correspondant (320) au moyen d'une caméra (330) avec un capteur d'image (331) et une source lumineuse (332), dans lequel l'objet du monde réel (320) est transporté dans une direction de transport définissant un axe de transport (T), ledit procédé comprenant :
• l'obtention (S1) d'une image virtuelle (300) comprenant ledit ensemble de points (355-1...355-15), chaque point (355-1...355-15) présentant des coordonnées 3D,
• la réalisation (S2) d'une première transformation de ladite image virtuelle (300) par rotation de ladite image virtuelle (300) au moins partiellement autour d'un axe sensiblement perpendiculaire à l'axe de transport (T) de telle sorte que l'image virtuelle (300) soit visualisée depuis une perspective latérale,
• après la réalisation de la première transformation (S2), l'identification (S3), dans ledit ensemble de points (355-1...355-15), d'une pluralité de points erronés (356-1...356-15), lesdits points erronés (356-1...356-15) sont configurés selon un motif prédéterminé (P) dans l'image virtuelle (300),
• la suppression (S7) desdits points erronés (356-1...356-15) dans ledit motif prédéterminé (P) dans l'image virtuelle (300).

2. Procédé selon la revendication 1, dans lequel la rotation de ladite image virtuelle comprend la rotation par une opération vectorielle.

3. Procédé selon la revendication 1, dans lequel la rotation de ladite image virtuelle (300) comprend la rotation selon un angle prédéterminé.

4. Procédé selon l'une quelconque des revendications 1 à 3, comprenant en outre la réalisation (S4) d'une deuxième transformation de ladite image virtuelle (300) en réalisant une linéarisation sur la base des points erronés identifiés (356-1...356-15).

5. Procédé selon la revendication 4, comprenant en outre la réalisation (S5) d'une troisième transformation de ladite image virtuelle (300) en réalisant une orthogonalisation sur la base des points erronés identifiés (356-1...356-15) après la réalisation (S4) de la deuxième transformation.

6. Procédé selon la revendication 5, comprenant en outre la réalisation (S6) d'une quatrième transformation de ladite image virtuelle (300) en réalisant une réduction de dimensionnalité sur la base des points erronés identifiés (356-1...356-15) après la réalisation (S5) de la troisième transformation.

7. Procédé selon l'une quelconque des revendications 1 à 6, dans lequel, avant la première transformation, les points erronés identifiés (356-1...356-15) sont alignés avec l'axe de transport (T).

8. Procédé selon l'une quelconque des revendications précédentes, dans lequel ledit motif prédéterminé (P) est essentiellement une ligne.

9. Procédé selon la revendication 8, dans lequel ladite ligne est au moins partiellement rectiligne et/ou courbe.

10. Procédé selon l'une quelconque des revendications précédentes, dans lequel ledit motif prédéterminé (P) comprend au moins une forme géométrique prédéterminée.

11. Procédé selon la revendication 10, dans lequel ladite forme géométrique prédéterminée est un triangle et/ou un coin.

12. Procédé selon l'une quelconque des revendications précédentes, comprenant en outre l'étape de reproduction (S8) d'une image virtuelle corrigée (300') en réalisant une transformation inverse de l'image excluant les points erronés supprimés (356-1...356-15).

13. Programme informatique comprenant un code de programme informatique, le programme informatique étant adapté, s'il est exécuté par un processeur, pour réaliser le procédé selon l'une quelconque des revendications 1 à 12.
